# EUROPEAN PATENT APPLICATION

(11) **EP 4 783 291 A1**
(43) Date of publication of application: **29.07.2026**
(21) Application number: 24881193.7
(22) Date of filing: 13.08.2024
(51) Int. Cl.: H01M 10/0587

(54) **MANUFACTURING DEVICE AND METHOD FOR ELECTRODE ASSEMBLY**

(30) Priority: 27.10.2023 CN 202311413172
(71) Applicant: Contemporary Amperex Technology Co., Limited, Ningde, Fujian 352100 (CN)
(72) Inventor: MIAO, Siyu, Ningde, Fujian 352100 (CN); WANG, Zhiming, Ningde, Fujian 352100 (CN); HUANG, Caixia, Ningde, Fujian 352100 (CN); TANG, Minghao, Ningde, Fujian 352100 (CN)
(74) Representative: Lorenz Seidler Gossel Part. mbB
(86) International application number: PCT/CN2024/111659
(87) International publication number: WO 2025/086825

(57) **Abstract**

The present application provides a manufacturing device and method for an electrode assembly. The manufacturing device for an electrode assembly comprises a winding pin and a heating component, wherein the winding pin is used for winding an electrode sheet and a separator to form a winding structure, and the heating component is configured to be inserted into the winding center of the winding structure and heat the winding structure. By means of the manufacturing device, the heating component can heat the winding structure at the winding center of the winding structure, such that at least some of ion channels in the separator in the inner ring of the winding structure are melt and close, thereby blocking ion shuttling, facilitating reduction of lithium deposition in the winding structure, and effectively lowering the risk of lithium deposition in a battery.

## Description

### CROSS-REFERENCE TO RELATED APPLICATION

The present application claims priority to Chinese Patent Application No. 202311413172.7, filed on October 27, 2023 and entitled "MANUFACTURING DEVICE AND METHOD FOR ELECTRODE ASSEMBLY", the content of which is incorporated herein by reference in its entirety.

### TECHNICAL FIELD

The present application relates to the technical field of batteries, and in particular, to a manufacturing device and method for an electrode assembly.

### BACKGROUND

Lithium-ion batteries have the advantages of high specific energy and high power density, and are widely used in electronic devices and transportation vehicles, such as mobile phones, laptop computers, electric bicycles, electric cars, electric airplanes, electric ships, and electric tools.

With the continuous expansion of the application range of lithium-ion batteries, how to effectively reduce the risk of lithium plating in the battery has attracted more and more attention from those skilled in the art.

### SUMMARY

In view of the above problems, the present application provides a manufacturing device and method for an electrode assembly. The electrode assembly manufactured by the manufacturing device for an electrode assembly of the electrode assembly can effectively reduce the risk of lithium plating in the battery.

In a first aspect, some embodiments of the present application provide a manufacturing device for an electrode assembly. The manufacturing device for an electrode assembly includes a winding mandrel and a heating component. The winding mandrel is configured to wind an electrode plate and a separator to form a wound structure, and the heating component is configured to be inserted into a winding center of the wound structure and heat the wound structure. Through the above manufacturing device, the heating component can heat the wound structure at the winding center of the wound structure, such that at least part of the ionic pathways of the separator in the inner layer of the wound structure are melted and closed, thereby blocking the transport of ions. This is conducive to reducing lithium plating in the wound structure and can effectively reduce the risk of lithium plating in the battery.

According to the manufacturing device provided in some embodiments of the present application, two heating components are provided, and the two heating components are capable of moving away from each other and flattening the wound structure, so as to shape the wound structure.

According to the manufacturing device provided in some embodiments of the present application, the manufacturing device further includes a pressing component disposed opposite to the heating component, and the pressing component and the heating component are respectively located on an outer side and an inner side of the wound structure and clamp the wound structure, such that the separator and the electrode plate in the wound structure are re-bonded and pressed to a reduced thickness. This can not only reduce the degree of bending of the wound structure but also improve the uniformity of winding gaps in the wound structure, thereby facilitating the shaping of the wound structure.

According to the manufacturing device provided in some embodiments of the present application, the winding mandrel is provided with a clearance recess, and the clearance recess is recessed inward from an outer peripheral surface of the winding mandrel; the heating component is inserted into the winding center through the clearance recess, such that the heating component can remain in the winding center after the winding mandrel is withdrawn from the winding center, thereby facilitating the flattening and heating of the wound structure.

According to the manufacturing device provided in some embodiments of the present application, the heating component includes a cover and a heating lamp; the cover is sleeved on an outer periphery of the heating lamp; the cover includes a blocking part and a light-transmitting part connected to each other, and the light-transmitting part is oriented toward the wound structure, such that the light emitted by the heating lamp irradiates a preset position of the wound structure through the light-transmitting part, thereby facilitating the heating of the preset position.

According to the manufacturing device provided in some embodiments of the present application, the light-transmitting part is connected to the blocking part in a circumferential direction of the cover, and a range of a central angle of the light-transmitting part corresponding to the cover is set to 10° to 90°, such that the heating component can heat a designated region, thereby reducing the possibility of capacity loss of the wound structure caused by heating over an excessively large area.

According to the manufacturing device provided in some embodiments of the present application, the light-transmitting part extends in an axial direction of the heating component, and a dimension of the light-transmitting part in the axial direction is greater than a dimension of the wound structure in the axial direction, such that an entire continuous region, in the axial direction, of a designated region in the wound structure can be heated by the heating component, thereby effectively reducing the possibility of lithium plating in the bent region.

According to the manufacturing device provided in some embodiments of the present application, the heating lamp includes at least one of an infrared lamp, an infrared laser lamp, a ceramic heating lamp, and a UVA lamp.

According to the manufacturing device provided in some embodiments of the present application, the heating component further includes a temperature sensor, and the temperature sensor is configured to detect a temperature of the wound structure. This is conducive to achieving control of the temperature of the heating region of the wound structure, thereby helping control the temperature of the heating region of the wound structure to be within an appropriate range.

According to the manufacturing device provided in some embodiments of the present application, the heating apparatus further includes a control unit, and the control unit is communicatively connected to the temperature sensor and the heating component.

According to the manufacturing device provided in some embodiments of the present application, the pressing component includes a first abutting surface, and the heating component includes a second abutting surface; the first abutting surface is configured as a concave arc-shaped surface, and the second abutting surface is configured as a convex arc-shaped surface; the pressing component abuts against the outer side of the wound structure via the first abutting surface, and the heating component abuts against the inner side of the wound structure via the second abutting surface. This is conducive to increasing contact areas between the first abutting surface and the wound structure and between the second abutting surface and the wound structure, and improving the stability of pressing the wound structure by the first abutting surface and the second abutting surface.

**In** a second aspect, some embodiments of the present application further provide a manufacturing method for an electrode assembly. The manufacturing method includes:
winding an electrode plate and a separator to form a wound structure; and
heating the wound structure at a winding center of the wound structure.

According to the manufacturing method provided in some embodiments of the present application, heating the wound structure further includes:
clamping and pressing the wound structure, so as to bond the electrode plate and the separator.

The technical solutions provided in the embodiments of the present disclosure at least bring the following beneficial effects:
Some embodiments of the present application provide a manufacturing device for an electrode assembly. The manufacturing device for an electrode assembly includes a winding mandrel and a heating component. The winding mandrel is configured to wind an electrode plate and a separator to form a wound structure, and the heating component is configured to be inserted into a winding center of the wound structure and heat the wound structure. Through the above manufacturing device, the heating component can heat the wound structure at the winding center of the wound structure, such that at least part of the ionic pathways of the separator in the inner layer of the wound structure are melted and closed, thereby blocking the transport of ions. This is conducive to reducing lithium plating in the wound structure and can effectively reduce the risk of lithium plating in the battery.

The above description is only an overview of the technical solutions of the present application. To more clearly understand the technical means of the present application to enable implementation in accordance with the content of the specification and to make the above and other purposes, features, and advantages of the present application more obvious and easy to understand, the detailed description of the present application is provided below.

### BRIEF DESCRIPTION OF THE DRAWINGS

By reading the detailed description of the preferred embodiments below, various additional advantages and benefits will become clear to those of ordinary skill in the art. The drawings are provided solely for the purpose of illustrating the preferred embodiments and shall not be construed as limiting the present application. Furthermore, the same reference numerals in all the drawings denote identical components. In the drawings:
FIG. 1 is an exploded view of a battery according to some embodiments of the present application;
FIG. 2 is a schematic exploded view of a battery module according to some embodiments of the present application;
FIG. 3 is a schematic diagram of a winding mandrel in a state of being in a wound structure according to some embodiments of the present application;
FIG. 4 is a schematic diagram of a heating component in a state where a wound structure is flattened according to some embodiments of the present application;
FIG. 5 is a schematic diagram of a partial structure of a manufacturing device for an electrode assembly according to some embodiments of the present application;
FIG. 6 is a schematic structural diagram of a heating component according to some embodiments of the present application; and
FIG. 7 is a cross-sectional view of a heating component according to some embodiments of the present application.

Reference numerals in the detailed description are as follows:
1, winding mandrel; 11, clearance recess; 2, heating component; 21, cover; 211, light-transmitting part; 212, blocking part; 213, second abutting surface; 22, heating lamp; 3, pressing component; 31, first abutting surface; 4, spreading assembly; 41, clamping jaw; 5, case; 5a, first case part; 5b, second case part; 5c, accommodating space; 6, battery module; 7, battery cell; 71, wound structure; 8, battery.

### DETAILED DESCRIPTION

To make the objectives, technical solutions, and advantages of embodiments of the present application clearer, the technical solutions in the embodiments of the present application will be clearly described hereinafter with reference to the drawings in the embodiments of the present application. It is apparent that the described embodiments are some, but not all, embodiments of the present application. Based on the embodiments in the present application, all other embodiments obtained by those of ordinary skill in the art without creative efforts shall fall within the protection scope of the present application.

Unless otherwise defined, all technical and scientific terms used in the present application have the same meaning as commonly understood by those skilled in the art to which the present application belongs. The terms used in the specification of the present application are only used to describe specific embodiments and are not intended to limit the present application. The terms "include", "comprise", "have", "provided with", and any variants thereof in the specification and claims of the present application and the above description of the drawings are intended to cover a non-exclusive inclusion. The terms "first", "second", and the like in the specification and claims of the present application and the above drawings are used to distinguish different objects and are not intended to describe a specific order or priority.

Reference in the present application to "embodiment" means that a particular feature, structure, or characteristic described in connection with the embodiment can be included in at least one embodiment of the present application. The references of the word in the context of the specification do not necessarily refer to the same embodiment, nor to separate or alternative embodiments exclusive of other embodiments.

In the description of the present application, it should be noted that unless otherwise explicitly specified or limited, the terms "mount", "interconnect", "connect", and "attach" shall be construed broadly and may be, for example, fixed connection, detachable connection, or integrated connection, or direct connection, indirect connection via an intermediate, or a communication between interiors of two elements. For those of ordinary skill in the art, the specific meanings of the above terms in the present application can be understood according to specific conditions.

In the present application, the term "and/or" is merely a way to describe the association relationship between associated objects and indicates that there may be three relationships. For example, A and/or B may indicate that: only A is present, both A and B are present, and only B is present. In addition, the character "/" in the present application generally indicates an "or" relationship between the associated objects before and after the "/".

In the embodiments of the present application, the same reference numerals represent the same components, and for the sake of brevity, detailed descriptions of the same components are omitted in different embodiments. It should be understood that the thickness, length, width, and other dimensions of various components in the embodiments of the present application shown in the drawings, as well as the overall thickness, length, width, and other dimensions of the integrated device, are only exemplary and should not be construed as limiting the present application in any way.

In the embodiments of the present application, "parallel" includes not only a case of being absolutely parallel, but also a case of being approximately parallel according to common knowledge in engineering. In addition, "perpendicular" includes not only a case of being absolutely perpendicular, but also a case of being approximately perpendicular according to common knowledge in engineering. Illustratively, if the included angle between two directions is 85° to 90°, it may be considered that the two directions are perpendicular; if the included angle between two directions is 0° to 5°, it may be considered that the two directions are parallel.

The term "plurality of" used in the present application refers to no less than two (including two).

At present, judging from the trends of the market situation, the application of batteries is becoming increasingly widespread. Batteries are not only applied in energy storage power systems such as hydropower, thermal power, wind power, and solar power stations, but also widely applied in electric transportation vehicles such as electric bicycles, electric motorcycles, or electric cars, as well as in military equipment, aerospace, and other fields.

The battery mentioned in the embodiments of the present application refers to a single physical module including one or a plurality of battery cells to provide higher voltage and capacity.

The battery cell may be a secondary battery cell, which refers to a battery cell that can continue to be used by activating the active material through charging after the battery cell is discharged.

The battery cell may be a lithium-ion battery cell, a sodium-ion battery cell, a sodium-lithium-ion battery cell, a lithium metal battery cell, a sodium metal battery cell, a lithium-sulfur battery cell, a magnesium-ion battery cell, a nickel-hydrogen battery cell, a nickel-cadmium battery cell, a lead storage battery cell, or the like.

The battery cell generally includes an electrode assembly. The electrode assembly includes a positive electrode, a negative electrode, and a separator. During the charging and discharging process of the battery cell, active ions (such as lithium ions) are intercalated and deintercalated back and forth between the positive electrode and the negative electrode. The separator is disposed between the positive electrode and the negative electrode to prevent the positive electrode and the negative electrode from short-circuiting while allowing the passage of active ions through the ionic pathways provided thereon.

During charging of the battery cell, metal ions are deintercalated from the positive electrode plate and intercalated into the negative electrode plate; however, some abnormal conditions may occur, causing plating of metal ions and thereby resulting in the risk of short circuits between the positive electrode plate and the negative electrode plate.

Illustratively, taking a lithium-ion battery cell as an example, due to insufficient space of the negative electrode plate for lithium intercalation, excessively high resistance of lithium ions being intercalated into the negative electrode plate, or excessively rapid deintercalation of lithium ions from the positive electrode plate, the deintercalated lithium ions cannot be intercalated into the negative electrode plate in equal amounts, and the lithium ions that cannot be intercalated into the negative electrode plate can only gain electrons on the surface of the negative electrode plate, thereby forming metallic lithium, which is the lithium plating phenomenon. Lithium plating not only causes performance degradation of the lithium-ion battery cell and substantially shortens the cycle life, but also limits the fast-charging capacity of the lithium-ion battery cell. In addition, when lithium plating occurs in the battery cell, the plated lithium metal is highly active and can react with the electrolyte at relatively low temperatures, resulting in a decrease in the self-heating onset temperature and an increase in the self-heating rate of the battery cell, which severely endangers the safety of the battery cell.

The lithium plating phenomenon is more likely to occur in the bent region of the wound electrode assembly. The main reason for the lithium plating phenomenon is that the positive electrode plate and the negative electrode plate located in the bent region need to be bent, and the positive electrode active substance layer and the negative electrode active substance layer are prone to stress concentration during the bending process, resulting in detachment of their respective active substances. Due to the detachment of the active substances, especially the detachment of the active substances on the negative electrode plate, the number of lithium intercalation sites on the negative electrode active substance layer of the negative electrode plate may be less than the number of lithium ions that can be provided by the positive electrode active substance layer of the adjacent positive electrode plate, thereby resulting in the lithium plating phenomenon. When lithium plating is severe, the deintercalated lithium ions may form lithium crystals on the surface of the negative electrode plate. The lithium crystals may easily pierce the separator, resulting in the risk of short circuits between the adjacent positive electrode plate and negative electrode plate.

In view of this, the embodiments of the present application provide a manufacturing device for an electrode assembly. A winding mandrel in the manufacturing device can wind an electrode plate and a separator to form a wound structure, and a heating component can be inserted into a winding center of the wound structure to heat the wound structure, such that at least part of the ionic pathways of the separator in the inner layer of the wound structure are melted and closed, and the transport of ions is blocked. This is conducive to reducing lithium plating in the wound structure and can effectively reduce the risk of lithium plating in the battery.

The manufacturing device for an electrode assembly provided in the embodiments of the present application can be applied to the battery manufacturing process. The manufactured electrode assembly may be used to produce and manufacture batteries, and the manufactured batteries may be used in, but not limited to, electric devices, such as vehicles, ships, or aircraft. The batteries manufactured by the manufacturing device for an electrode assembly disclosed in the present application may be used to constitute the power system of the electric device. In this way, it is conducive to reducing the risk of lithium plating in the battery.

The electric device provided in the embodiments of the present application may be a vehicle, a mobile phone, a portable device, a laptop computer, a ship, a spacecraft, an electric toy, an electric tool, or the like. The vehicle may be a fuel vehicle, a gas vehicle, or a new energy vehicle, and the new energy vehicle may be a pure electric vehicle, a hybrid vehicle, an extended-range vehicle, or the like; the spacecraft includes an airplane, a rocket, a space shuttle, a spaceship, and the like; the electric toy includes a stationary or mobile electric toy, such as a game console, an electric car toy, an electric ship toy, and an electric airplane toy; the electric tool includes an electric metal cutting tool, an electric grinding tool, an electric assembling tool, and an electric tool for railways, such as an electric drill, an electric grinder, an electric wrench, an electric screwdriver, an electric hammer, an electric impact drill, a concrete vibrator, and an electric planer.

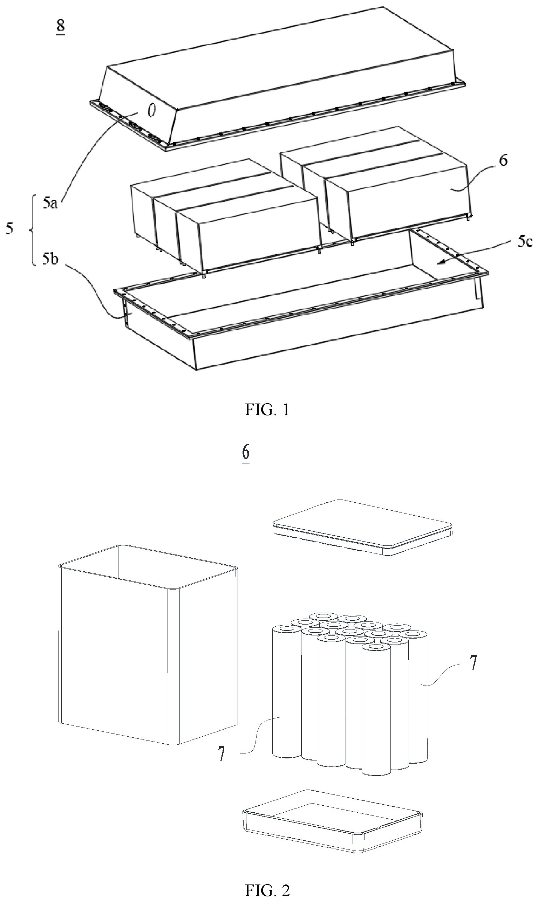

FIG. 1 is an exploded schematic view of a battery according to some embodiments of the present application. As shown in FIG. 1, the battery 8 includes a case 5 and a battery cell (not shown). The battery cell is accommodated in the case 5. The battery cell may be the smallest unit constituting the battery.

The case 5 is configured to accommodate the battery cell, and the case 5 may be of various structures. In some embodiments, the case 5 may include a first case part 5a and a second case part 5b. The first case part 5a and the second case part 5b are mutually lidded with each other. The first case part 5a and the second case part 5b jointly define an accommodating space 5c for accommodating the battery cell. The second case part 5b may be of a hollow structure with one end open, the first case part 5a is of a plate-like structure, and the first case part 5a lids the open side of the second case part 5b to form the case 5 having the accommodating space 5c. The first case part 5a and the second case part 5b may each also be of a hollow structure with one end open, and the open side of the first case part 5a lids the open side of the second case part 5b to form the case 5 having the accommodating space 5c. Certainly, the first case part 5a and the second case part 5b may be of various shapes, such as a cylinder and a rectangular parallelepiped.

To improve the sealing performance after the first case part 5a and the second case part 5b are connected, a sealing member, such as a sealant or a seal ring, may be further provided between the first case part 5a and the second case part 5b.

If the first case part 5a lids the top part of the second case part 5b, the first case part 5a may also be referred to as an upper case cover, and the second case part 5b may also be referred to as a lower case body.

In the battery 8, one or a plurality of battery cells may be provided. If a plurality of battery cells are provided, the plurality of battery cells may be connected in series, in parallel, or in series-parallel. The series-parallel connection means that both series connection and parallel connection are present for the connection among the plurality of battery cells. The plurality of battery cells may be directly connected in series, in parallel, or in series-parallel, and then the whole formed by the plurality of battery cells is accommodated in the case 5. Certainly, the situation may be that the plurality of battery cells are first connected in series, in parallel, or in series-parallel to form battery modules 6, and then the plurality of battery modules 6 are connected in series, in parallel, or in series-parallel to form a whole and accommodated in the case 5.

FIG. 2 is an exploded schematic view of the battery module shown in FIG. 1.

As shown in FIG. 2, in some embodiments, a plurality of battery cells 7 are provided, and the plurality of battery cells 7 are first connected in series, in parallel, or in series-parallel to form the battery module 6. The plurality of battery modules 6 are then connected in series, in parallel, or in series-parallel to form a whole and accommodated in the case.

The plurality of battery cells 7 in the battery module 6 may be electrically connected via a busbar component to achieve parallel connection, series connection, or series-parallel connection among the plurality of battery cells 7 in the battery module 6.

The battery cell 7 may be a cylindrical battery cell, a prismatic battery cell, or a battery cell of other shapes.

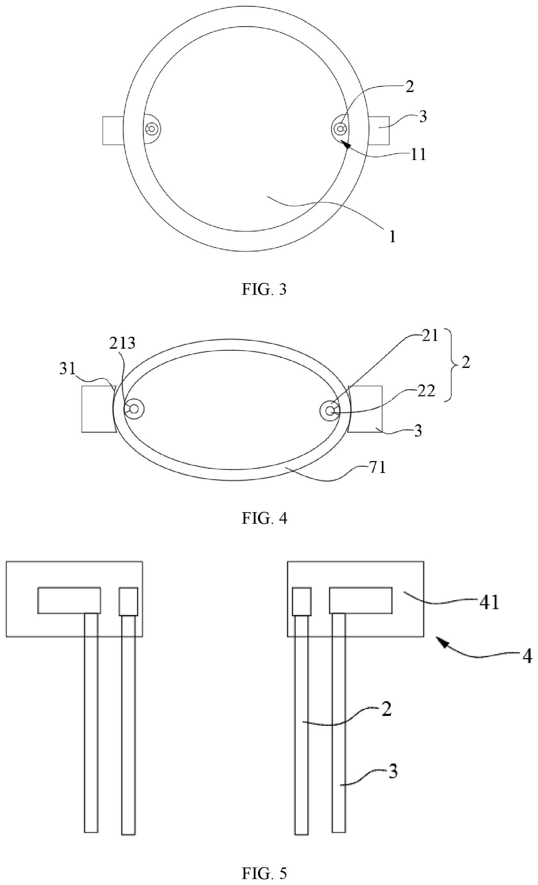

Some embodiments of the present application provide a manufacturing device for an electrode assembly. As shown in FIG. 3, the manufacturing device includes a winding mandrel 1 and a heating component 2. The winding mandrel 1 is configured to wind an electrode plate and a separator to form a wound structure 71, and the heating component 2 is configured to be inserted into a winding center of the wound structure 71 and heat the wound structure 71.

The winding mandrel 1 may be a component configured to wind the electrode plate and the separator to form the wound structure 71. The separator is an insulator provided with ionic pathways. After the electrode plate and the separator are stacked and wound, the separator can isolate two adjacent layers of electrode plates to reduce the possibility of short circuits, while allowing the passage of active ions through the provided ionic pathways.

Illustratively, the winding mandrel 1 may have a cylindrical structure, and the wound structure 71 formed by winding with the winding mandrel may be a cylindrical wound structure 71 with a winding center. In some embodiments, the winding mandrel 1 may also have a columnar structure, such as a prismatic structure or an elliptical columnar structure, such that the winding mandrel 1 can provide sufficient acting force to the electrode plate and the separator, so as to wind the electrode plate and the separator. The prismatic structure may be a regular hexagonal columnar structure, or a columnar structure whose cross-section is in a regular polygonal shape.

The heating component 2 may be a member configured to heat the wound structure 71 formed by the electrode plate and the separator. The wound structure 71 is heated by the heating component 2, such that the separator in the wound structure 71 is melted upon heating, and at least part of the ionic pathways are closed, thereby blocking the transport of ions in the separator.

Since the inner layer of the wound structure 71 is bent to a relatively large degree, stress applied thereto is also relatively large, and lithium plating is more likely to occur on the inner layer of the wound structure 71. By inserting the heating component 2 into the winding center of the wound structure 71, the heating component 2 can heat the separator in the inner layer of the wound structure 71, such that at least part of the ionic pathways of the separator located in the inner layer are melted and closed, thereby effectively reducing the risk of lithium plating.

Illustratively, the heating component 2 may include, but is not limited to, a heating rod, a radiant heating lamp, a heating wire, and the like, which may be selected by those skilled in the art based on actual situations.

Illustratively, the heating of the wound structure 71 by the heating component 2 may be performed as follows: raising the temperature of the wound structure 71 to the range of 140 °C to 180 °C, and maintaining the temperature within the temperature range for 10 s. In this way, at least part of the ionic pathways of the wound structure 71 can be effectively melted and closed, and the risk of lithium plating can be effectively reduced. In some embodiments, the temperature of the wound structure 71 raised by the heating component 2 may range from 150 °C to 170 °C. Illustratively, the heating component 2 may raise the temperature of the wound structure 71 to 155 °C, 160 °C, or 165 °C, such that part of the ionic pathways in the wound structure 71 can be smoothly melted and closed, thereby effectively reducing lithium plating.

In some embodiments, as shown in FIG. 4, two heating components 2 are provided, and the two heating components 2 are capable of moving away from each other and flattening the wound structure 71.

The two heating components 2 are disposed opposite to each other, such that after being inserted into the winding center of the wound structure 71, the two heating components 2 can outwardly spread the wound structure 71 in a separating direction by moving away from each other, thereby flattening the wound structure 71 and forming straight regions and bent regions in the wound structure 71, with the two heating components 2 abutting against inner sides of the bent regions, respectively. Since the electrode plates in the bent region generate stress concentration during the bending process, which results in detachment of their respective active substances and makes the lithium plating phenomenon more likely to occur, the heating components 2 abutting against the inner sides of the bent regions can melt and close the ionic pathways of the separator, thereby effectively reducing the risk of lithium plating in the battery 8.

Illustratively, as shown in FIG. 5, the manufacturing device may further include a spreading assembly 4. The two heating components 2 are connected to output ends of the spreading assembly 4, and can flatten the wound structure 71 under the action of the spreading assembly 4. In some embodiments, the spreading assembly 4 may include clamping jaws 41, and the clamping jaws 41 can drive the heating component 2 to move under the action of hydraulic force or a motor.

In some embodiments, the manufacturing device further includes a pressing component 3 disposed opposite to the heating component 2, and the pressing component 3 and the heating component 2 are respectively located on an outer side and an inner side of the wound structure 71 and clamp the wound structure 71.

The pressing component 3 may be a component configured to press the wound structure 71. The heating component 2 heats the bent region of the wound structure 71, such that the separator can be melted, and the separator can be softened. Then, the bent region of the wound structure 71 is pressed, such that the separator and the electrode plate in the bent region are re-bonded and pressed to a reduced thickness. This can not only reduce the degree of bending of the bent region but also improve the uniformity of winding gaps in the bent region, thereby facilitating the shaping of the bent region of the wound structure 71.

By disposing the pressing component 3 and the heating component 2 opposite to each other and on the outer side and the inner side of the wound structure 71, respectively, the pressing component 3 and the heating component 2 can clamp and press the wound structure 71 therebetween by moving toward each other, thereby enabling effective pressing of the wound structure 71.

In some embodiments, the pressing component 3 may be connected to the clamping jaw 41 of the spreading assembly 4. Under the action of the clamping jaw 41, the pressing component 3 and the heating component 2 can move toward each other to clamp and press the wound structure 71.

In some embodiments, the winding mandrel 1 is provided with a clearance recess 11, and the clearance recess 11 is recessed inward from an outer peripheral surface of the winding mandrel 1; the heating component 2 is inserted into the winding center through the clearance recess 11.

The clearance recess 11 may be a recessed structure provided on the winding mandrel 1, which may be formed by recessing the outer peripheral surface of the winding mandrel 1 inward. The heating component 2 being inserted into the winding center through the clearance recess 11 may be the heating component 2 being placed in the clearance recess 11 and extending into the winding center of the wound structure 71 together with the winding mandrel 1. The heating component 2 is integrated into the recessed structure of the winding mandrel 1, such that the heating component 2 can remain in the winding center after the winding mandrel 1 is withdrawn from the winding center, thereby facilitating the flattening and heating of the wound structure 71.

In some embodiments, the clearance recess 11 may be formed by removing material from the winding mandrel 1 through mechanical processing, such as milling, or may be formed simultaneously with the winding mandrel 1 through an integral molding process, such as casting.

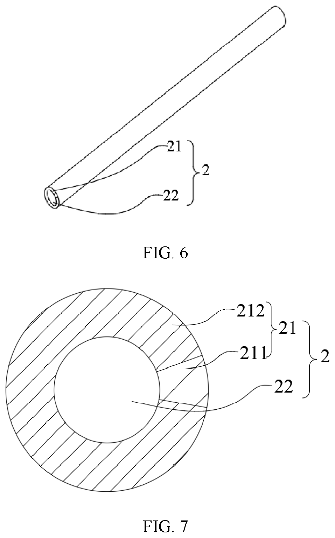

In some embodiments, as shown in FIG. 6, the heating component 2 includes a cover 21 and a heating lamp 22, and the cover 21 is sleeved on an outer periphery of the heating lamp 22. As shown in FIG. 7, the cover 21 includes a blocking part 212 and a light-transmitting part 211 connected to each other, and the light-transmitting part 211 is oriented toward the wound structure 71.

The cover 21 may be a wall body structure on the outer periphery of the heating component 2, which is sleeved on the outer periphery of the heating lamp 22 and has strong structural strength, such that it can provide sufficient acting force to flatten the wound structure 71. The heating lamp 22 may be a heating component 2 that heats the wound structure 71 by irradiating the wound structure 71 with light.

The blocking part 212 and the light-transmitting part 211 are different parts in the cover 21, respectively. The blocking part 212 may be a part configured to block light emitted by the heating lamp 22, which can block the light from irradiating in a preset direction, thereby reducing the influence of the light on positions of the wound structure 71 that do not require heating. The light-transmitting part 211 may be a part configured to transmit the light emitted by the heating lamp 22. The blocking part 212 cooperates with the light-transmitting part 211, such that the light emitted by the heating lamp 22 irradiates a preset position of the wound structure 71 through the light-transmitting part 211, thereby facilitating the heating of the preset position.

In some embodiments, the blocking part 212 may be made of a quartz-based alloy such as ferrosilicon and silicon steel, which not only provides the blocking part 212 with good structural strength, but also provides the blocking part 212 with good high-temperature resistance. Illustratively, the light-transmitting part 211 may be made of high-temperature-resistant glass, such that the light emitted by the heating lamp 22 can pass through the light-transmitting part 211 and be directed toward the preset position of the wound structure 71.

The light-transmitting part 211 being oriented toward the wound structure 71 may be the light-transmitting part 211 facing the bent region of the wound structure 71, such that the heating component 2 can heat the bent region by light.

In some embodiments, the light-transmitting part 211 is connected to the blocking part 212 in a circumferential direction of the cover 21, and the range of a central angle of the light-transmitting part 211 corresponding to the cover 21 is set to 10° to 90°.

The light-transmitting part 211 being connected to the blocking part 212 in the circumferential direction of the cover 21 may be the light-transmitting part 211 and the blocking part 212 being arranged in the circumferential direction of the cover 21. By setting the range of the central angle of the light-transmitting part 211 corresponding to the cover 21 to be 10° to 90°, the heating component 2 can heat a designated region, thereby reducing the possibility of capacity loss of the wound structure 71 caused by heating over an excessively large area.

Illustratively, the range of the central angle of the light-transmitting part 211 corresponding to the cover 21 may be set to 30° to 40°, which facilitates the control of the heating range of the heating component 2 on the bent region, and can reduce heating over a large area in the wound structure 71. In some embodiments, the range of the central angle of the light-transmitting part 211 corresponding to the cover 21 may be set to 30°, 35°, or 40°, such that the heating component 2 can heat an appropriate region of the wound structure 71, thereby reducing the possibility of heating over a large area in the wound structure 71.

Illustratively, the range of the central angle of the light-transmitting part 211 corresponding to the cover 21 may be set to 70° to 80°, which facilitates the control of the heating range of the heating component 2 on the bent region, and can heat a designated region with a relatively large area in the wound structure 71. In some embodiments, the range of the central angle of the light-transmitting part 211 corresponding to the cover 21 may be set to 70°, 75°, or 80°, such that the heating component 2 can heat a designated region over a relatively large range in the wound structure 71, thereby achieving heating over a relatively large area in the wound structure 71.

In some embodiments, the light-transmitting part 211 extends in an axial direction of the heating component 2, and the dimension of the light-transmitting part 211 in the axial direction is greater than the dimension of the wound structure 71 in the axial direction.

The light-transmitting part 211 extending in the axial direction of the heating component 2 may be the light-transmitting part 211 and the blocking part 212 both extending in the axial direction of the heating component 2, such that in the state where the heating component 2 is inserted into the winding center, the light-transmitting part 211 can heat a continuous region of the wound structure 71 in the axial direction of the heating component 2, thereby facilitating heating of the continuous region in the bent region of the wound structure 71. The dimension of the light-transmitting part 211 in the axial direction is set to be greater than the dimension of the wound structure 71 in the axial direction, such that an entire continuous region, in the axial direction, of the bent region in the wound structure 71 can be heated by the heating component 2, thereby effectively reducing the possibility of lithium plating in the bent region.

In some embodiments, the heating lamp 22 includes at least one of an infrared lamp, an infrared laser lamp, a ceramic heating lamp 22, and a UVA lamp.

The infrared lamp, the infrared laser lamp, the ceramic heating lamp 22, and the UVA lamp may all be devices that can heat an external device using emitted light. By allowing the heating lamp 22 to include at least one of the infrared lamp, the infrared laser lamp, the ceramic heating lamp 22, and the UVA lamp, the heating lamp 22 can heat the wound structure 71 using emitted light.

The heating lamp 22 including at least one of an infrared lamp, an infrared laser lamp, a ceramic heating lamp 22, and a UVA lamp may be the heating lamp 22 being an infrared lamp, an infrared laser lamp, a ceramic heating lamp 22, or a UVA lamp. Alternatively, the situation may be that the heating lamp 22 includes a plurality of heating sections, and each heating section may be an infrared lamp, an infrared laser lamp, a ceramic heating lamp 22, or a UVA lamp.

In some embodiments, the heating component 2 further includes a temperature sensor, and the temperature sensor is configured to detect the temperature of the wound structure 71.

The temperature sensor may be a device configured to detect the temperature of a heating region of the wound structure 71. By arranging the temperature sensor in the heating component 2, it is conducive to achieving control of the temperature of the heating region of the wound structure 71, thereby helping control the temperature of the heating region of the wound structure 71 to be within the range of 140 °C to 180 °C.

In some embodiments, the heating apparatus further includes a control unit, and the control unit is communicatively connected to the temperature sensor and the heating component 2.

The control unit may be a centralized or distributed controller. For example, the control unit may be an independent single-chip microcomputer or may be composed of a plurality of distributed single-chip microcomputers, and a control program may be run in the single-chip microcomputer, thereby controlling the heating component 2 to achieve its function. Illustratively, when the temperature sensor detects that the temperature of the heating region of the wound structure 71 is lower than 140 °C, the control unit can control the heating component 2 to heat the wound structure 71, causing the temperature to rise to the range of 140 °C to 180 °C. When the temperature sensor detects that the temperature of the heating region of the wound structure 71 is higher than 180 °C, the control unit can control the heating component 2 to stop heating the wound structure 71, causing the temperature to fall to the range of 140 °C to 180 °C. When the temperature sensor detects that the temperature of the heating region of the wound structure 71 is within the range of 140 °C to 180 °C, the control unit can control the heating component 2 to stop heating the wound structure 71.

In some embodiments, the pressing component 3 includes a first abutting surface 31, and the heating component 2 includes a second abutting surface 213. The first abutting surface 31 is configured as a concave arc-shaped surface, and the second abutting surface 213 is configured as a convex arc-shaped surface. The pressing member abuts against the outer side of the wound structure 71 via the first abutting surface 31, and the heating component 2 abuts against the inner side of the wound structure 71 via the second abutting surface 213.

The first abutting surface 31 may be a surface of the pressing component 3, configured to abut against the wound structure 71, and the second abutting surface 213 may be a surface of the heating component 2, configured to abut against the wound structure 71. The first abutting surface 31 and the second abutting surface 213 are configured to clamp the outer side and the inner side of the wound structure 71, such that the wound structure 71 can be pressed.

By configuring the first abutting surface 31 abutting against the outer side of the wound structure 71 as a concave arc-shaped surface, and configuring the second abutting surface 213 abutting against the inner side of the wound structure 71 as a convex arc-shaped surface, it is conducive to increasing contact areas between the first abutting surface 31 and the wound structure 71 and between the second abutting surface 213 and the wound structure, and improving the stability of pressing the wound structure 71 by the first abutting surface 31 and the second abutting surface 213.

Some embodiments of the present application further provide a manufacturing method for an electrode assembly. The manufacturing method includes the following steps:
In S1, an electrode plate and a separator are wound to form a wound structure 71.

The above step may be performed using the manufacturing device for an electrode assembly provided in the foregoing technical solutions, and the electrode plate and the separator that are stacked are wound using the winding mandrel 1 to form the wound structure 71.

In S2, the wound structure 71 is heated at a winding center of the wound structure 71.

The above step may be performed using the manufacturing device for an electrode assembly provided in the foregoing technical solutions. The heating component 2 is inserted into the winding center of the wound structure 71 to heat the wound structure 71, such that the separator in the wound structure 71 is melted upon heating, and at least part of the ionic pathways are closed. As a result, the transport of ions in the separator is blocked, thereby effectively reducing the risk of lithium plating in the wound structure 71.

In some embodiments, while heating the wound structure 71, the method further includes clamping and pressing the wound structure 71, so as to bond the electrode plate and the separator.

By clamping and pressing the wound structure 71 while heating the wound structure 71, the separator and the electrode plate in the wound structure 71 are re-bonded and pressed to a reduced thickness, which can improve the uniformity of winding gaps in the wound structure 71 and facilitate the shaping of the wound structure 71.

Some embodiments of the present application provide a manufacturing device for an electrode assembly. As shown in FIG. 3, the manufacturing device for an electrode assembly includes a winding mandrel 1, two heating components 2, and two pressing components 3. The heating component 2 is inserted into a winding center through a clearance recess 11 formed on the winding mandrel 1. The heating components 2 and the pressing components 3 are arranged in pairs, and the two pairs of heating components 2 and pressing components 3 are connected to two clamping jaws 41 of a spreading assembly 4, respectively. As shown in FIG. 4, the first abutting surface 31, having a concave arc-shaped surface, of the heating component 2 and the second abutting surface 213, having a convex arc-shaped surface, of the pressing component 3, respectively abut against the outer side and the inner side of the wound structure 71 for pressing the wound structure 71. As shown in FIG. 7, the heating component 2 includes a cover 21 and a heating lamp 22. In the cover 21, a light-transmitting part 211 is connected to a blocking part 212 in a circumferential direction of the cover 21, and the light-transmitting part 211 faces the bent region of the wound structure 71, so as to heat the bent region of the wound structure 71.

Finally, it should be noted that the above embodiments are only used to illustrate the technical solutions of the present application, rather than limit the same. Although the present application has been described in detail with reference to the foregoing embodiments, those of ordinary skill in the art should understand that modifications can still be made to the technical solutions recorded in the foregoing embodiments, or equivalent substitutions to some or all of the technical features can be made. However, such modifications or substitutions do not make the spirit of the corresponding technical solutions deviate from the scope of the technical solutions in the embodiments of the present application, and shall all fall within the scope of the claims and specification of the present application. In particular, the technical features mentioned in the embodiments can be combined in any manner, provided that there is no structural conflict. The present application is not limited to the specific embodiments disclosed herein, but encompasses all technical solutions falling within the scope of the claims.

## Claims

1. A manufacturing device for an electrode assembly, comprising:
a winding mandrel configured to wind an electrode plate and a separator to form a wound structure; and
a heating component configured to be inserted into a winding center of the wound structure and heat the wound structure.

2. The manufacturing device according to claim 1, wherein two heating components are provided, and the two heating components are capable of moving away from each other and flattening the wound structure.

3. The manufacturing device according to claim 1 or 2, wherein the manufacturing device further comprises a pressing component disposed opposite to the heating component; the pressing component and the heating component are respectively located on an outer side and an inner side of the wound structure and clamp the wound structure.

4. The manufacturing device according to claim 3, wherein the winding mandrel is provided with a clearance recess, and the clearance recess is recessed inward from an outer peripheral surface of the winding mandrel;
the heating component is inserted into the winding center through the clearance recess.

5. The manufacturing device according to claim 3 or 4, wherein the pressing component comprises a first abutting surface, and the heating component comprises a second abutting surface; the first abutting surface is configured as a concave arc-shaped surface, and the second abutting surface is configured as a convex arc-shaped surface; the pressing component abuts against the outer side of the wound structure via the first abutting surface, and the heating component abuts against the inner side of the wound structure via the second abutting surface.

6. The manufacturing device according to any one of claims 1 to 5, wherein the heating component comprises a cover and a heating lamp; the cover is sleeved on an outer periphery of the heating lamp; the cover comprises a blocking part and a light-transmitting part connected to each other, and the light-transmitting part is oriented toward the wound structure.

7. The manufacturing device according to claim 6, wherein the light-transmitting part is connected to the blocking part in a circumferential direction of the cover, and a range of a central angle of the light-transmitting part corresponding to the cover is set to 10° to 90°.

8. The manufacturing device according to claim 6 or 7, wherein the light-transmitting part extends in an axial direction of the heating component, and a dimension of the light-transmitting part in the axial direction is greater than a dimension of the wound structure in the axial direction.

9. The manufacturing device according to any one of claims 6 to 8, wherein the heating lamp comprises at least one of an infrared lamp, an infrared laser lamp, a ceramic heating lamp, and a UVA lamp.

10. The manufacturing device according to any one of claims 1 to 9, wherein the heating component further comprises a temperature sensor, and the temperature sensor is configured to detect a temperature of the wound structure.

11. The manufacturing device of claim 10, wherein the manufacturing device further comprises a control unit, and the control unit is communicatively connected to the temperature sensor and the heating component.

12. A manufacturing method for an electrode assembly, comprising:
winding an electrode plate and a separator to form a wound structure; and
heating the wound structure at a winding center of the wound structure.

13. The manufacturing method according to claim 12, wherein heating the wound structure at the winding center of the wound structure further comprises:
clamping and pressing the wound structure, so as to bond the electrode plate and the separator.
